# EUROPEAN PATENT SPECIFICATION

(11) **EP 3 714 590 B1**
(45) Date of publication and mention of the grant of the patent: **10.11.2021**
(21) Application number: 19818185.1
(22) Date of filing: 18.12.2019
(51) Int. Cl.: H04L 29/08, G06Q 30/02

(54) **MOBILE CONNECTIVITY DEVICE FOR TRANSMITTING AND RECEIVING DATA SIGNALS**
MOBILKONNEKTIVITÄTSVORRICHTUNG ZUM SENDEN UND EMPFANGEN VON DATENSIGNALEN
DISPOSITIF DE CONNECTIVITÉ MOBILE POUR LA TRANSMISSION ET LA RÉCEPTION DE SIGNAUX DE DONNÉES

(30) Priority: 20.12.2018 IT 201800020596
(43) Date of publication of application: 30.09.2020
(73) Proprietor: TECHNOMOTIVE S.R.L., 00137 Roma (IT)
(72) Inventor: GERMANO', Alessio, 00054 Fiumicino (Roma) (IT); MAGGIOLINI, Leonardo, 00137 Roma (IT); MAGGIOLINI, Tiziano Maria, 00137 Roma (IT); MAGGIOLINI, Raffaello, 00137 Roma (IT)
(74) Representative: Rapisardi, Mariacristina
(86) International application number: PCT/EP2019/085906
(87) International publication number: WO 2020/127457

(56) References cited:
- WO-A1-2016/082020
- US-A1- 2016 098 756

## Description

The present invention relates to a mobile connectivity device for transmitting and receiving data signals.

In particular, the present invention finds application in the telecommunications industry and advertising industry.

In a society in which more and more individuals are connected by personal electronic devices, the advertising industry has developed greatly in digital mode, obtaining information on and targeting customers in a manner that was previously not imaginable.

For example, through digital advertising panels positioned on Internet websites it is possible to know the number of persons reached by said advertising messages and in particular know the number of people who have interacted with said advertising messages, generating information that is extremely useful for evaluating the potential of such a message.

In the real world, transmitting information and/or advertising messages is difficult to quantify from the point of view of the number of people actually reached because the visual or aural interactions do not give quantifiable feedback.

Static information panels or mobile devices for transmitting audio signals can be for example thought of. In the second case, reference is made particularly to vehicles equipped with acoustic diffusers that send sound signals.

In both cases, it is possible to make only an estimate of the people reached by the visual or aural information without being able to gather quantitative information to evaluate the efficacy of the conveyed information.

Document US 2016/098756 A1 discloses a device adapted for displaying advertisements on vehicles.

The technical task of the invention is to overcome the limits set out above.

The object of the present invention is to provide a device that is able to convey into the physical world information that is optically visible to a plurality of people and is able to receive feedback on the number of persons reached by said conveyed information.

The technical task and these and other objects according to the present invention are achieved realising a device according to claim 1.

Further features and advantages of the invention will emerge more fully from the description of a preferred but not exclusive embodiment of the mobile connectivity device for transmitting and receiving data signals according to the invention, the embodiment being illustrated by way of non-limiting example in the accompanying drawings, in which:

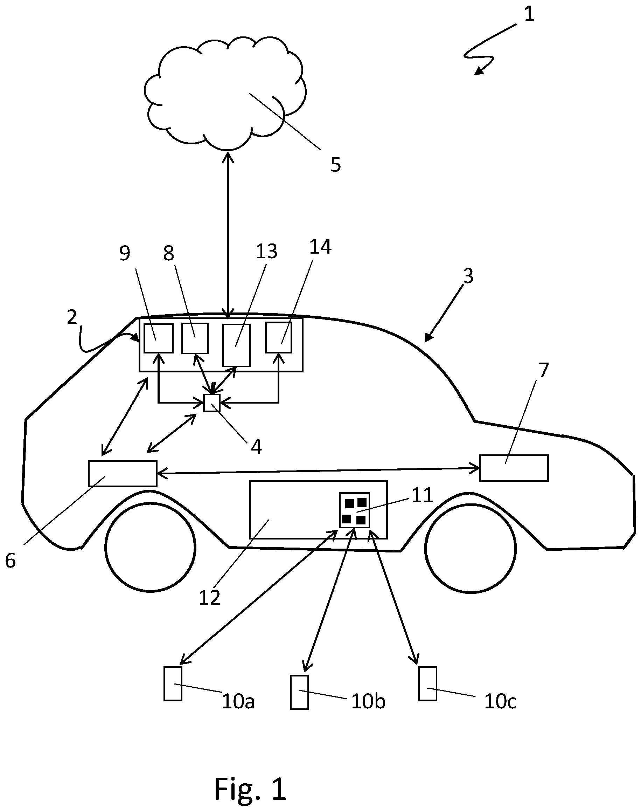

figure 1 shows a schematic view of the mobile connectivity device for transmitting and receiving data signals according to the invention.

With particular reference to the figure, the mobile connectivity device for transmitting and receiving data signals, indicated overall by the number 1, comprises data transceiving means 2 installed in a vehicle 3 equipped with at least one battery 7, a processor 4 installed on the vehicle 3, a rechargeable supply battery 6 connected to the battery of the vehicle 3 and a panel 12 installed on the vehicle 3.

The processor 4 is connected to the data transceiving means 2 and operationally connected to an Internet server 5 for processing and storing data.

The rechargeable battery 6 supplies the processor 4 and the data transceiving means 2.

The panel 12 has information that is optically visible to a plurality of persons encountered by the vehicle and an access code 11 for accessing the Internet. In particular, the panel 12 can be an advertising panel.

In the embodiment shown in the figure, the vehicle 3 is a motor vehicle. In other embodiments which are not shown, the vehicle 3 can be, for example, a road, air or sea means of transport.

Preferably, the processor 4 is operationally connected to the electronic control unit of the vehicle 3 to acquire diagnostics signals relating to the status of the vehicle 3. In particular, the processor 4 is connected to an OBD-II port of the electronic control unit of the vehicle 3.

The data transceiving means 2 comprises a GPS tracker 8 that detects the geographical position and the speed of the vehicle 3. Each geographical position and each speed of the vehicle 3 are processed by the processor 4 and sent to the Internet server 5 to be stored and processed.

The GPS tracker 8 comprises a plurality of movement sensors.

In particular, the GPS tracker 8 comprises at least one axial accelerometer for geophysical mapping of the surface travelled by the vehicle 3.

Advantageously, the GPS tracker 8 detects data relating to the acceleration perpendicular to the surface travelled by the vehicle 3 that are sent to the Internet server 5 to be processed to obtain information, for example, on the state of the road surface travelled along.

The data transceiving means 2 comprises a WiFi modem router 9 connected to the Internet operating according to IEEE 802.11 standard.

In particular, the WiFi modem router 9 is connected to the Internet by a SIM card.

The WiFi modem router 9 is configured to provide an Internet connection for a plurality of personal electronic devices 10a, 10b, 10c located in the vicinity of the vehicle 3. In other words, the WiFi modem router 9 sends radio frequency signals covering an area of a few dozen metres outside the vehicle 3 to provide a free and costless Internet connection.

In particular, this Internet connection is enabled by at least one of the personal electronic devices 10a, 10b, 10c through the acquisition of the access code 11 present on the panel 12 installed on said vehicle 3.

The access code 11 in the embodiment shown in the figure is a QR code (Quick Response code). The QR code can be easily and intuitively acquired by any personal electronic device 10a, 10b, 10c comprising a camera.

In other embodiments, which are not shown in the figure, the identification code 11 is a passive RFID.

The panel 12 is provided with information that is optically visible to a plurality of persons encountered by the vehicle 3.

The panel 12 is installed on an outer surface of the vehicle 3.

Preferably, the panel 12 is secured to the outer surface by micro suction cups.

In one preferred solution, the panel 12 has a phosphorescent surface. Alternatively, the panel 12 has a holographic and/or double reflection surface.

These conformations of the surface of the panel 12 advantageously permit the delivery of information with a high visual impact.

Substantially, when any personal electronic device 10a, 10b, 10c is connected to the WiFi modem router 9, the mobile connectivity device for transmitting and receiving data signals 1 via said Internet server 5 and said processor 4 requests, through a graphic interface, the personal electronic device 10a, 10b, 10c to acquire the access code 11.

In particular, the graphic interface comprises at least one information box that is variable according to the geographical position of the vehicle 3 detected by the GPS tracker 8.

The information box is chosen by the processor 4 from a plurality of information boxes that are associated with a plurality of geographical positions and are stored in the Internet server 5.

When the access code 11 is acquired, the processor sends a display signal of the panel 12 to the Internet server 5 and enables the Internet connection for the personal electronic device 10a, 10b, 10c that has acquired the access code 11. In this manner, the display number of the panel 12 is stored on the server 5.

In a preferred embodiment, once the access code 11 is acquired, the processor sends via the WiFi modem router a data signal to the personal electronic device 10a, 10b, 10c having a connection for downloading an information technology application that is compatible with any operating system (iOS, Android, Windows Phone) for receiving data signals sent by Bluetooth transceiving modules 13 of mobile connectivity devices for transmitting and receiving data signals 1 made according to the invention.

According to one aspect of the present invention, the processor 4 activates the WiFi modem router 9 when the GPS tracker 8 detects that the vehicle 3 is stationary, in other words when it detects nil speed of the vehicle 3.

It should be noted that the data transceiving means 2 comprises a repetition module 14 of a mobile telephony signal. In particular, the repetition module 14 amplifies 2G and/or 3G and/or 4G and/or 5G and/or LTE signals. In this manner, a plurality of mobile connectivity devices for transmitting and receiving data signals 1 create a network of repetition modules 14 that assists the repetition of the mobile telephony signals.

It should be noted that the data transceiving means 2 comprises a Bluetooth transceiving module 13.

The Bluetooth transceiving module 13 is configured to send said data signals to a plurality of personal electronic devices 10a, 10b, 10c that are positioned at a distance less than 100 metres from the vehicle 3.

In particular, the processor 4 activates the Bluetooth transceiving module 13 when the GPS tracker 8 detects a speed of the vehicle 3 below a preset threshold speed. Preferably, this preset threshold speed is comprised between 0 km/h and 30 km/h, more preferably between 0 km/h and 15 km/h, still more preferably between 0 km/h and 10 km/h.

In this manner, a Bluetooth transceiving module 13 seeks the personal electronic devices 10a, 10b, 10c available for receiving one of the data signals within a range of 100 metres from the vehicle 3 and the processor 4 commands one of said data signals to be sent to each personal electronic device 10a, 10b, 10c that is available for reception.

In particular, when the GPS tracker 8 detects a first geographical position of the vehicle 3, the processor 4 commands the Bluetooth transceiving module 13 to send a first data signal to each of the personal electronic devices 10a, 10b, 10c.

On the other hand, when the GPS tracker 8 detects a second geographical position of the vehicle 3 at a distance that is greater than a threshold distance from said detected first geographical position, the processor 4 commands the Bluetooth transceiving module 13 to send a second data signal to each of the personal electronic devices 10a, 10b, 10c.

Preferably, this threshold distance is comprised between 1 km and 10 km, more preferably between 1 km and 5 km, still more preferably between 1 km and 2 km. It should be mentioned that the first data signal and the second data signal sent by the Bluetooth transceiving module 13 are selected by the processor 4 from a plurality of data signals that are associated with a plurality of geographical positions and are stored on the Internet server 5.

In particular, the first data signal and the second data signal are associated respectively with the first geographical position and with the second geographical position.

Substantially, the connectivity device for transmitting and receiving data signals 1 sends data signals via a Bluetooth transceiving module 13 to a plurality of personal electronic devices 10a, 10b, 10c in which the contents of said data signals are selected on the basis of the geographical position of the vehicle 3 detected by the GPS tracker 8.

The connectivity device for transmitting and receiving data signals 1 as conceived herein is susceptible of numerous modifications and variants, all falling within the scope of the invention, as defined by the appended claims. In practice, the materials used, as well as the dimensions, can be any according to the needs and the state of the art.

## Claims

1. A mobile connectivity device for transmitting and receiving data signals (1) comprising:
- data transceiving means (2) installed in a vehicle (3) equipped with at least one battery (7),
- a processor (4) installed on said vehicle (3), connected to said data transceiving means (2) and operationally connected to an Internet server (5) for processing and storing data,
- a rechargeable battery (6) supplying said processor (4) and said data transceiving means (2) connected to said battery (7) of said vehicle (3), and
- a panel (12) installed on said vehicle (3), said panel having information that is optically visible to a plurality of persons encountered by said vehicle (3) and on said panel being present an access code (11) to the Internet;
said data transceiving means (2) comprising a GPS tracker (8) that detects the geographical position and the speed of said vehicle (3) and a WiFi modem router (9) connected to the Internet to provide an Internet connection for a plurality of personal electronic devices (10a, 10b, 10c) located near said vehicle (3) by acquiring said access code (11) from at least one of said personal electronic devices (10a, 10b, 10c) comprising a camera;
wherein when any of said personal electronic devices (10a, 10b, 10c) is connected to the WiFi modem router (9), said mobile connectivity device for transmitting and receiving data signals (1) via said Internet server (5) and said processor (4) requests, through a graphic interface, said personal electronic device (10a, 10b, 10c) to acquire said access code (11). and wherein when said access code (11) is acquired, said processor (4) sends a signal of display of said panel (12) to said Internet server (5) and enables the Internet connection for said personal electronic devices (10a, 10b, 10c) that have acquired said access code (11), and the number of displays of the panel (12) is stored on said server (5).

2. The mobile connectivity device for transmitting and receiving data signals (1) according to the preceding claim **characterized in that** said access code (11) is a QR code.

3. The mobile connectivity device for transmitting and receiving data signals (1) according to one or more preceding claims **characterized in that** said panel (12) is secured to said vehicle (3) by micro suction cups.

4. The mobile connectivity device for transmitting and receiving data signals (1) according to one or more preceding claims **characterized in that** said data transceiving means (2) comprises a Bluetooth transceiving module (13) for sending said data signals to a plurality of said personal electronic devices (10a, 10b, 10c) positioned at a maximum distance of 100 metres from said vehicle (3).

5. The mobile connectivity device for transmitting and receiving data signals (1) according to one or more preceding claims **characterized in that** said data transceiving means (2) comprises a repetition module (14) of a mobile telephony signal.

6. The mobile connectivity device for transmitting and receiving data signals (1) according to one or more preceding claims **characterized in that** said processor (4) activates said WiFi modem router (9) when said GPS tracker (8) detects that said vehicle (3) is stationary.

7. The mobile connectivity device for transmitting and receiving data signals (1) according to one or more preceding claims **characterized in that** said processor (4) activates said Bluetooth transceiving module (13) when said GPS tracker (8) detects a speed of said vehicle (3) that is below a preset threshold.

8. The mobile connectivity device for transmitting and receiving data signals (1) according to one or more preceding claims **characterized in that** said processor (4) commands the Bluetooth transceiving module (13) to send to each of said personal electronic devices (10a, 10b, 10c) a first data signal when said GPS tracker (8) detects a first geographical position of said vehicle (3).

9. The mobile connectivity device for transmitting and receiving data signals (1) according to one or more preceding claims **characterized in that** said processor (4) commands the Bluetooth transceiving module (13) to send to each of said personal electronic devices (10a, 10b, 10c) a second data signal when said GPS tracker (8) detects a second geographical position of said vehicle (3), said second geographical position being at a distance above a threshold distance from said first geographical position.

10. The mobile connectivity device for transmitting and receiving data signals (1) according to the preceding claim **characterized in that** said processor (4) selects said first data signal and said second data signal sent from among a plurality of data signals stored on said Internet server (5) and associated with a plurality of geographical positions, said first transmitted data signal and said second sent data signal being associated respectively with said first geographical position and with said second geographical position.

## Patentansprüche

1. Mobilkonnektivitätsvorrichtung zum Senden und Empfangen von Datensignalen (1), umfassend:
- Daten-Sende-/Empfangsmittel (2), die in einem Fahrzeug (3) installiert sind, das mit mindestens einer Batterie (7) ausgestattet ist,
- einen in dem Fahrzeug (3) installierten Prozessor (4), der mit den Daten-Sende-/Empfangsmitteln (2) verbunden ist und betriebswirksam mit einem Internet-Server (5) verbunden ist, um Daten zu verarbeiten und zu speichern,
- eine wiederaufladbare Batterie (6), die den Prozessor (4) und die Daten-Sende-/Empfangsmittel (2) versorgt, die mit der Batterie (7) des Fahrzeugs (3) verbunden sind, und
- eine in dem Fahrzeug (3) installierte Tafel (12), wobei die Tafel Informationen aufweist, die für eine Vielzahl von Personen, denen das Fahrzeug (3) begegnet, optisch sichtbar sind, und auf der Tafel ein Zugangscode (11) zum Internet vorhanden ist; wobei die Daten-Sende-/Empfangsmittel (2) einen GPS-Tracker (8), der die geografische Position und die Geschwindigkeit des Fahrzeugs (3) detektiert, und einen WiFi-Modemrouter (9), der mit dem Internet verbunden ist, um eine Internet-Verbindung für eine Vielzahl von persönlichen elektronischen Geräten (10a, 10b, 10c) bereitzustellen, die sich in der Nähe des Fahrzeugs (3) befinden, indem der Zugangscode (11) von mindestens einem der persönlichen elektronischen Geräte (10a, 10b, 10c) erfasst wird, die eine Kamera umfassen, umfassen; wobei die Mobilkonnektivitätsvorrichtung zum Senden und Empfangen von Datensignalen (1) über den Internet-Server (5) und den Prozessor (4) über eine grafische Schnittstelle das persönliche elektronische Gerät (10a, 10b, 10c) auffordert, den Zugangscode (11) zu erfassen, wenn eines der persönlichen elektronischen Geräte (10a, 10b, 10c) mit dem WiFi-Modemrouter (9) verbunden ist,
und wobei, wenn der Zugangscode (11) erfasst wird, der Prozessor (4) ein Anzeigesignal der Tafel (12) an den Internetserver (5) sendet und die Internetverbindung für die persönlichen elektronischen Geräte (10a, 10b, 10c), die den Zugangscode (11) erfasst haben, ermöglicht und die Anzahl der Anzeigen der Tafel (12) wird auf dem Server (5) gespeichert.

2. Mobilkonnektivitätsvorrichtung zum Senden und Empfangen von Datensignalen (1) nach dem vorhergehenden Anspruch, **dadurch gekennzeichnet, dass** der Zugangscode (11) ein QR-Code ist.

3. Mobilkonnektivitätsvorrichtung zum Senden und Empfangen von Datensignalen (1) nach einem oder mehreren der vorhergehenden Ansprüche, **dadurch gekennzeichnet, dass** die Tafel (12) am Fahrzeug (3) durch Mikrosaugnäpfe befestigt ist.

4. Mobilkonnektivitätsvorrichtung zum Senden und Empfangen von Datensignalen (1) nach einem oder mehreren der vorhergehenden Ansprüche, **dadurch gekennzeichnet, dass** die Daten-Sende-/Empfangsmittel (2) ein Bluetooth-Sende-/Empfangsmodul (13) zum Senden der Datensignale an eine Vielzahl von persönlichen elektronischen Geräten (10a, 10b, 10c), die in einer maximalen Entfernung von 100 Metern vom Fahrzeug (3) positioniert sind, umfassen.

5. Mobilkonnektivitätsvorrichtung zum Senden und Empfangen von Datensignalen (1) nach einem oder mehreren der vorhergehenden Ansprüche, **dadurch gekennzeichnet, dass** die Daten-Sende-/Empfangsmittel (2) ein Wiederholungsmodul (14) eines Mobiltelefonsignals umfassen.

6. Mobilkonnektivitätsvorrichtung zum Senden und Empfangen von Datensignalen (1) nach einem oder mehreren der vorhergehenden Ansprüche, **dadurch gekennzeichnet, dass** der Prozessor (4) den WiFi-Modemrouter (9) aktiviert, wenn der GPS-Tracker (8) erkennt, dass das Fahrzeug (3) stationär ist.

7. Mobilkonnektivitätsvorrichtung zum Senden und Empfangen von Datensignalen (1) nach einem oder mehreren der vorhergehenden Ansprüche, **dadurch gekennzeichnet, dass** der Prozessor (4) das Bluetooth-Sende-/Empfangsmodul (13) aktiviert, wenn der GPS-Tracker (8) eine Geschwindigkeit des Fahrzeugs (3) detektiert, die unter einem voreingestellten Schwellenwert liegt.

8. Mobilkonnektivitätsvorrichtung zum Senden und Empfangen von Datensignalen (1) nach einem oder mehreren der vorhergehenden Ansprüche, **dadurch gekennzeichnet, dass** der Prozessor
(4) dem Bluetooth-Sende-/Empfangsmodul (13) befiehlt, an jedes der persönlichen elektronischen Geräte (10a, 10b, 10c) ein erstes Datensignal zu senden, wenn der GPS-Tracker (8) eine erste geografische Position des Fahrzeugs (3) detektiert.

9. Mobilkonnektivitätsvorrichtung zum Senden und Empfangen von Datensignalen (1) nach einem oder mehreren der vorhergehenden Ansprüche, **dadurch gekennzeichnet, dass** der Prozessor (4) dem Bluetooth-Sende-/Empfangsmodul (13) befiehlt, an jedes der persönlichen elektronischen Geräte (10a, 10b, 10c) ein zweites Datensignal zu senden, wenn der GPS-Tracker (8) eine zweite geografische Position des Fahrzeugs (3) detektiert, wobei die zweite geografische Position in einer Entfernung oberhalb einer Schwellenentfernung von der ersten geografischen Position liegt.

10. Mobilkonnektivitätsvorrichtung zum Senden und Empfangen von Datensignalen (1) nach dem vorhergehenden Anspruch, **dadurch gekennzeichnet, dass** der Prozessor (4) das erste Datensignal und das zweite Datensignal auswählt, die aus einer Vielzahl von Datensignalen gesendet werden, die auf dem Internetserver (5) gespeichert sind und mit einer Vielzahl von geografischen Positionen assoziiert sind, wobei das erste gesendete Datensignal und das zweite gesendete Datensignal jeweils mit der ersten geografischen Position und der zweiten geografischen Position assoziiert sind.

## Revendications

1. Dispositif de connectivité mobile pour la transmission et la réception de signaux de données (1) comprenant :
- des moyens d'émission-réception (2) de données installés dans un véhicule (3) équipé d'au moins une batterie (7),
- un processeur (4) installé sur ledit véhicule (3), connecté auxdits moyens d'émission-réception (2) de données et connecté de manière fonctionnelle à un serveur Internet (5) pour traiter et stocker des données,
- une batterie rechargeable (6) alimentant ledit processeur (4) et lesdits moyens d'émission-réception (2) de données, reliée à ladite batterie (7) dudit véhicule (3), et
- un panneau (12) installé sur ledit véhicule (3), ledit panneau comportant des informations étant optiquement visibles pour une pluralité de personnes rencontrées par ledit véhicule (3) et sur ledit panneau étant présent un code d'accès (11) à l'Internet ;
lesdits moyens d'émission-réception (2) de données comprenant un traceur GPS (8) qui détecte la position géographique et la vitesse dudit véhicule (3) et un modem-routeur Wifi (9) connecté à Internet pour fournir une connexion Internet à une pluralité de dispositifs électroniques (10a, 10b, 10c) personnels situés près dudit véhicule (3) en acquérant ledit code d'accès (11) à partir d'au moins un desdits dispositifs électroniques (10a, 10b, 10c) personnels comprenant une caméra ;
dans lequel, lorsque l'un quelconque desdits dispositifs électroniques (10a, 10b, 10c) personnels est connecté au modem-routeur Wifi (9), ledit dispositif de connectivité mobile pour la transmission et la réception de signaux de données (1) via ledit serveur Internet (5) et ledit processeur (4) demande, par l'intermédiaire d'une interface graphique, audit dispositif électronique (10a, 10b, 10c) personnel d'acquérir ledit code d'accès (11);
et dans lequel lorsque ledit code d'accès (11) est acquis, ledit processeur (4) envoie un signal d'affichage dudit panneau (12) audit serveur Internet (5) et active la connexion Internet pour lesdits dispositifs électroniques (10a, 10b, 10c) personnels qui ont acquis ledit code d'accès (11), et le nombre d'affichages du panneau (12) est stocké sur ledit serveur (5).

2. Dispositif de connectivité mobile pour la transmission et la réception de signaux de données (1) selon la revendication précédente, **caractérisé en ce que** ledit code d'accès (11) est un code QR.

3. Dispositif de connectivité mobile pour la transmission et la réception de signaux de données (1) selon une ou plusieurs revendications précédentes, **caractérisé en ce que** ledit panneau (12) est fixé audit véhicule (3) par des micro-ventouses.

4. Dispositif de connectivité mobile pour la transmission et la réception de signaux de données (1) selon une ou plusieurs revendications précédentes, **caractérisé en ce que** lesdits moyens d'émission-réception de données (2) comprennent un module d'émission-réception Bluetooth (13) pour envoyer lesdits signaux de données à une pluralité desdits dispositifs électroniques (10a, 10b, 10c) personnels positionnés à une distance maximale de 100 mètres dudit véhicule (3).

5. Dispositif de connectivité mobile pour la transmission et la réception de signaux de données (1) selon une ou plusieurs revendications précédentes, **caractérisé en ce que** lesdits moyens d'émission-réception de données (2) comprennent un module de répétition (14) d'un signal de téléphonie mobile.

6. Dispositif de connectivité mobile pour la transmission et la réception de signaux de données (1) selon une ou plusieurs revendications précédentes, **caractérisé en ce que** ledit processeur (4) active ledit modem-routeur Wifi (9) lorsque ledit traceur GPS (8) détecte que ledit véhicule (3) est immobile.

7. Dispositif de connectivité mobile pour la transmission et la réception de signaux de données (1) selon une ou plusieurs revendications précédentes, **caractérisé en ce que** ledit processeur (4) active ledit module d'émission-réception Bluetooth (13) lorsque ledit traceur GPS (8) détecte une vitesse dudit véhicule (3) qui est inférieure à un seuil prédéfini.

8. Dispositif de connectivité mobile pour la transmission et la réception de signaux de données (1) selon une ou plusieurs revendications précédentes, **caractérisé en ce que** ledit processeur (4) commande le module d'émission-réception Bluetooth (13) pour envoyer à chacun desdits dispositifs électroniques (10a, 10b, 10c) personnels un premier signal de données lorsque ledit traceur GPS (8) détecte une première position géographique dudit véhicule (3).

9. Dispositif de connectivité mobile pour la transmission et la réception de signaux de données (1) selon une ou plusieurs revendications précédentes, **caractérisé en ce que** ledit processeur (4) commande le module d'émission-réception Bluetooth (13) pour envoyer à chacun desdits dispositifs électroniques (10a, 10b, 10c) personnels un second signal de données lorsque ledit traceur GPS (8) détecte une seconde position géographique dudit véhicule (3), ladite seconde position géographique étant à une distance supérieure à une distance seuil de ladite première position géographique.

10. Dispositif de connectivité mobile pour la transmission et la réception de signaux de données (1) selon la revendication précédente, **caractérisé en ce que** ledit processeur (4) sélectionne ledit premier signal de données et ledit second signal de données envoyés parmi une pluralité de signaux de données stockés sur ledit serveur Internet (5) et associés à une pluralité de positions géographiques, ledit premier signal de données transmis et ledit second signal de données envoyé étant associés respectivement à ladite première position géographique et à ladite seconde position géographique.
